# EUROPÄISCHE PATENTSCHRIFT

(11) **EP 0 770 471 B1**
(45) Veröffentlichungstag und Bekanntmachung des Hinweises auf die Patenterteilung: **14.03.2001**
(21) Anmeldenummer: 96116726.9
(22) Anmeldetag: 18.10.1996
(51) Int. Cl.: B29C 63/02, B65D 90/04

(54) **Korrosionsbeständiges Bauteil aus Metall**
Corrosion-resistant metallic construction element
Elément de construction métallique résistant à la corrosion

(30) Priorität: 27.10.1995 DE 19540052
(43) Veröffentlichungstag der Anmeldung: 02.05.1997
(73) Patentinhaber: Keramchemie GmbH, 56427 Siershahn (DE)
(72) Erfinder: Hillen, Uwe, 46459 Rees (DE)

(56) Entgegenhaltungen:
- WO-A-89/08178
- DE-A- 3 905 395
- DE-A- 4 343 297
- DE-U- 29 517 026
- US-A- 3 596 793
- US-A- 4 221 303
- US-A- 4 388 134
- PATENT ABSTRACTS OF JAPAN vol. 011, no. 377 (M-649), 9.Dezember 1987 & JP 62 148244 A (KUINRAITO DENSHI SEIKO KK), 2.Juli 1987,
- PATENT ABSTRACTS OF JAPAN vol. 009, no. 282 (M-428), 9.November 1985 & JP 60 125637 A (TAIYOU KOGYO KK), 4.Juli 1985,

## Beschreibung

Die Erfindung bezieht sich auf ein korrosionsbeständiges Bauteil aus Metall, insbesondere Stahl, wie Behälter, Rohrleitung oder dgl., mit einer auf der nutzungsseitigen Oberfläche aufgebrachten Schicht aus Gummi und einer auf derselben unter Bildung von Dehnungsfugen aufgeklebten Schicht aus einer Fluorthermoplastfolie.

In Rauchgasreinigungsanlagen aber auch in der chemischen Industrie werden Bauteile, wie Behälter und Rohrleitungen und dergleichen, eingesetzt, die aus einem tragenden Teil aus Stahl bestehen, welches an seiner nutzungsseitigen Fläche gegen Korrosion zu schützen ist. Dazu wird eine Zwischenschicht aus Gummi aufgebracht, die aus Weichgummi auf der Basis von Butylkautschuk, Chlorbutylkautschuk oder Brombutylkautschuk bestehen kann, wobei weitere Kautschuke, wie Polychloropren, Acrylnitrilbutadien- oder Styrol-Butadien-Kautschuk zugegen sein können. In vielen Fällen besteht ein Nachteil dieser Gummischicht darin, daß dieselbe Wasser aufnehmen kann, welches nach einer gewissen Betriebszeit durch die Gummischicht diffundiert und sich an der Oberfläche des aus Stahl bestehenden Bauteiles ansammeln kann und dort zusammen mit Sauerstoff oder anderen diffundierenden Substanzen zu einer Korrosion führt.

Um auch diese Korrosion zu vermeiden, ist es aus der DE-OS 43 43 297 bekannt, auf der Zwischenschicht aus Gummi Folien aus einem Fluorthermoplast aufzukleben, wobei zwischen den einzelnen Folien Dehnungsfugen vorhanden sind, die anschließend mit einer Fugenmasse bzw. einem Dichtungskitt ausgefüllt werden. Hier besteht jedoch der Nachteil, daß die Fugenmasse bzw. der Dichtungskitt nicht die gleiche chemische Beständigkeit und die gleiche Diffussionsdichtigkeit wie die Folien aus dem Fluorthermoplast aufweisen. Deshalb wurde bereits vorgeschlagen, in die Dehnungfuge einen Schweißdraht aus einem Fluorthermoplast einzulegen und dann die Fuge zu verschweißen. Durch die verhältnismäßig hohe Schweißtemperatur kann es jedoch auf der Schicht aus Gummi zu einer Blasenbildung kommen, die die Qualität der korrosionsbeständigen Auskleidung beeinträchtigt.

Der Erfindung liegt deshalb die Aufgabe zugrunde, ein korrosionsbeständiges Bauteil aus Metall zu schaffen, bei dem die Dehnungsfuge zwischen den Folien aus einem Fluorthermoplast die gleiche chemische Beständigkeit und die gleiche Diffussionsdichtigkeit wie die Folien selbst aufweisen.

Zur Lösung dieser Aufgabe wird gemäß der Erfindung bei einem korrosionsbeständigen Bauteil der eingangs beschriebenen Gattung vorgeschlagen, daß im Bereich der Dehnungsfuge der Fluorthermoplastfolie unterhalb derselben auf der Zwischenschicht ein die Dehnungsfuge unterlappender Streifen aus einer beidseitig chemisch geätzten Fluorthermoplastfolie aufgeklebt ist.

Durch eine solche Ausgestaltung besitzt das Bauteil im Bereich der Dehnungsfugen der Folien aus einem Fluorthermoplast ebenfalls die angestrebte chemische Beständigkeit und Diffussionsdichtigkeit. Ein Verschweißen der Dehnungsfugen ist nicht erforderlich, so daß die damit verbundene Schweißblasenbildung nicht mehr auftritt.

Weitere Merkmale eines korrosionsbeständigen Bauteiles gemäß der Erfindung sind in den Ansprüchen 2 bis 4 offenbart.

Die Erfindung wird nachfolgend anhand eines in einer Zeichnung dargestellten Ausführungsbeispieles näher erläutert.

In dieser Zeichnung ist von einem korrosionsbeständigen Bauteil 1, beispielsweise einem Behälter, nur ein Ausschnitt aus dessen Wandung gezeigt. Das Bauteil 1 besteht zunächst aus einem aus Stahl gefertigten Tragkörper 2, dessen nutzungseitige Oberfläche 3 zuerst durch Strahlen mit mineralischen Strahlmitteln oder Stahlkorn von Rost befreit wurde. Auf diese vorbereitete Oberfläche 3 wird eine Grundierungschicht 4 auf der Basis von chlorhaltigen Polymeren und Phenolharz aufgebracht, die eine Dicke von etwa 0,05 mm aufweist. Im Anschluß daran wird auf die Grundierungsschicht 4 eine Schicht 5 eines Kontaktklebstoffes aufgetragen, die eine Dicke von etwa 0,08 mm besitzt. Dieser Kontaktklebstoff besteht auf der Basis von Polychloropren/Polyisocyanat.

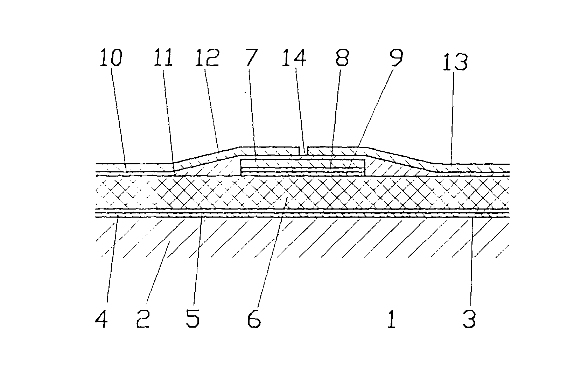

Nun wird auf eine Seite einer Zwischenschicht 6, die hier aus einer vulkanisierten Butylkautschukbahn besteht und die eine Dicke von etwa 3 bis 6 mm, vorteilhaft etwa 4 mm, besitzen kann, eine Schicht aus dem Kontaktklebstoff aufgetragen, der für die Schicht 5 auf der Grundierungsschicht 4 verwendet wurde. Diese Schicht ist jedoch in der Zeichnung nicht dargestellt. Sobald beide Schichten des Kontaktklebstoffes angetrocknet sind, wird die aus einer Butylkautschukbahn bestehende Zwischenschicht 6 mit ihrer Klebstoffschicht auf die Klebstoffschicht 5 aufgelegt und mit Hilfe von Andrückwerkzeugen fest gegen den Tragkörper 2 gepreßt.

Sodann wird ein beidseitig chemisch geätzter Folienstreifen 7 aus Polytetrafluorethylen auf einer Seite mit einer Grundierschicht 8 auf der Basis chlorhaltier Polymerer und Phenolharz versehen, die eine Dicke von etwa 0,05 mm aufweist. Auf diese Grundierschicht 8 wird dann eine Schicht 9 aus einem Kontaktklebstoff in einer Dicke von etwa 0,08 mm aufgestrichen. Auch dieser Kontaktklebstoff besteht auf der Basis von Polychloropren/Polyisocyanat. Der Folienstreifen 7 kann, je nach der Art und Größe des Bauteiles 1, eine Breite von 20 bis 300 mm, vorteilhaft von 30 bis 150 mm besitzen. Die Dicke eines solchen Folienstreifens 7 beträgt etwa 0,1 bis 1,0 mm, vorteilhaft 0,2 bis 0,5 mm.

Auch auf der aufgebrachten Zwischenschicht 6 wird eine Schicht aus einem Kontaktklebstoff aufgetragen, die streifenförmig ausgebildet ist und deren Breite geringfügig größer als die Breite des Folienstreifens 7 ist. Die Dicke dieser Schicht ist etwa 0,08 mm, und diese Schicht ist in der Zeichnung nicht dargestellt. Nach einer kurzen Trockenzeit der Schichten aus Kontaktklebstoff wird der Folienstreifen 7 mit seiner Schicht 9 aus Kontaktklebstoff auf die Schicht 6 aus Gummi aufgelegt und angepreßt. Anschließend wird auf die übrige Zwischenschicht 6 und die äußere Fläche des Folienstreifens 7, gegegenenfalls nach dem Auftragen einer Grundierschicht, eine Schicht 10 aus einem Kontaktklebstoff aufgestrichen, die eine Dicke von etwa 0,08 mm besitzt. Auf die geätzte Seite 11 zweier Folienbahnen 12, 13 aus Polytetrafluorethylen mit einer Dicke von etwa 0,4 mm wird nun ebenfalls eine etwa 0,05 mm dicke Grundierschicht auf der Basis chlorhaltiger Polymerer und Phenolharz aufgebracht, die in der Zeichnung jedoch nicht dargestellt ist. Sodann wird auf diese Grundierschicht auch eine Schicht aus einem Kontaktklebstoff mit einer Dicke von etwa 0,08 mm aufgetragen. Auch diese Schicht ist in der Zeichnung nicht gezeigt. Nach einer kurzen Trockenzeit der Schichten aus Kontaktklebstoff werden die Folienbahnen 12, 13 mit ihrer Schicht aus Kontaktklebstoff auf die Schicht 10, ebenfalls aus Kontaktklebstoff, der Zwischenschicht 6 und des Folienstreifens 7 aufgelegt und angepreßt. Zwischen den beiden Folienbahnen 12, 13 befindet sich eine schmale Dehnungsfuge 14, die entweder freibleiben kann oder mit einer weichen Fugenmasse ausgefüllt werden kann. Nach einer Aushärtung der Kontaktklebstoffschichten, die bei Umgebungstemperaturen mehrere Tage betragen kann, ist das Bauteil 1 bzw. dessen korrosionbeständige Verkleidung belastbar.

In Abänderung des erläuterten Ausführungsbeispieles kann die Zwischenschicht 6 auch aus einem Kunststoff auf der Basis eines Reaktionsharzes mit einer Glasübergangstemperatur von mindestens 45°C bestehen, wie aus der DE-OS 43 42 000 als solcher bekannt ist. Eine solche Zwischenschicht würde dann eine Dicke von etwa 0,5 bis 2,0 mm aufweisen. Ferner ist es möglich, daß die Grundierschicht 4, in Abhängigkeit vom Werkstoff des Tragkörpers 2 und/oder dem Einsatzzweck, entfällt.

## Patentansprüche

1. Korrosionsbeständiges Bauteil aus Metall, insbesondere Stahl, wie Behälter, Rohrleitung oder dgl., mit einer auf der nutzungsseitigen Oberfläche (3) aufgebrachten Zwischenschicht (6) und einer auf derselben unter Bildung von Dehnungsfugen (14) aufgeklebten Schicht aus einer Fluorthermoplastfolie (12,13),
dadurch gekennzeichnet,
daß im Bereich der Dehnungsfuge (14) der Fluorthermoplastfolie (12,13) unterhalb derselben auf der Zwischenschicht (6) ein die Dehnungsfuge (14) unterlappender Streifen (7) aus einer beidseitig chemisch geätzten Fluorthermoplastfolie aufgeklebt ist.

2. Bauteil nach Anspruch 1,
dadurch gekennzeichnet,
daß der unterlappende Folienstreifen (7) aus einer beidseitig chemisch geätzten Polytetrafluorethylenfolie gebildet ist.

3. Bauteil nach Anspruch 1 oder 2,
dadurch gekennzeichnet,
daß der Folienstreifen (7) eine Breite von 20 bis 300 mm, vorzugsweise von 30 bis 150 mm aufweist.

4. Bauteil nach Anspruch 1, 2 oder 3,
dadurch gekennzeichnet,
daß der Folienstreifen (7) eine Dicke von 0,1 bis 1,0 mm, vorzugsweise 0,2 bis 0,5 mm aufweist.

## Claims

1. Corrosion-resistant component made from metal, in particular steel, such as a container, piping or the like, having an intermediate layer (6) that is applied to the surface (3) on the side that is used and having a layer of fluorothermoplastic film (12, 13) that is adhered to the same with the formation of expansion joints (14), characterised in that a strip (7) is adhered to the intermediate layer (6) in the region of the expansion joint (14) of the fluorothermoplastic film (12, 13) underneath the same, which strip (7) underlies the expansion joint (14) and is made from a fluorothermoplastic film that is chemically etched on both sides.

2. Component according to claim 1, characterised in that the underlying film strip (7) is formed from a polytetrafluoroethylene film that is chemically etched on both sides.

3. Component according to claim 1 or 2, characterised in that the film strip (7) is 20 to 300 mm, preferably 30 to 150 mm, wide.

4. Component according to claim 1, 2 or 3,
characterised in that the film strip (7) is 0.1 to 1.0 mm, preferably 0.2 to 0.5 mm, thick.

## Revendications

1. Pièce de construction en métal inoxydable, notamment en acier, telle que réservoir, conduite ou moyen analogue comportant une couche intermédiaire (6) appliquée sur la surface (3) du côté utilisé et une couche en matière fluorothermoplastique (12, 13) collée sur la couche intermédiaire en laissant des joints de dilatation (14),
caractérisée en ce que
dans la zone du joint de dilatation (14) de la feuille de fluorothermoplastique (12, 13), en dessous de celle-ci et sur la couche intermédiaire (6), on a collé une bande (7) chevauchant le joint de dilatation (14), en une feuille de matière fluorothermoplastique dont les deux faces ont été attaquées chimiquement.

2. Pièce selon la revendication 1,
caractérisée en ce que
la bande de film (7) de chevauchement se compose d'une feuille de polytétrafluoréthylène dont les deux faces ont été attaquées chimiquement.

3. Pièce selon l'une quelconque des revendications 1 ou 2,
caractérisée en ce que
la bande de film (7) a une largeur de 20 à 300 millimètres, de préférence de 30 à 150 millimètres.

4. Pièce selon l'une quelconque des revendications 1, 2, 3,
caractérisée en ce que
la bande de film (7) a une épaisseur de 0,1 à 1,0 millimètre, de préférence entre 0,2 et 0,5 millimètre.
